# EUROPEAN PATENT APPLICATION

(11) **EP 4 718 177 A1**
(43) Date of publication of application: **01.04.2026**
(21) Application number: 24203220.9
(22) Date of filing: 27.09.2024
(51) Int. Cl.: G05B 19/05

(54) **METHOD AND SYSTEM FOR OPTIMIZING FUNCTIONAL BLOCK DIAGRAM PROGRAMMING FOR AUTOMATION ENVIRONMENT**

(71) Applicant: Siemens Aktiengesellschaft, 80333 München (DE)
(72) Inventor: BHAT, Satish, 560062 Bangalore (IN); K K, Jithin, 560100 Bangalore, Karnataka (IN); BURGER, Philipp, 90762 Fürth (DE)
(74) Representative: Patentanwaltskanzlei WILHELM & BECK

(57) **Abstract**

A system (200) and a method (100) for optimizing FBD programming for an automation environment. The method (100) includes receiving a user input selecting a FB associated with the FBD configured for implementation by the PLD (1000) to control an automated process in the automation environment, wherein each function block of the plurality of function blocks is characterized by physical properties that are distinct from the physical properties of other FBs in the FBD and the physical properties are associated with an input and an output of the FB. The method includes determining a set of FBs corresponding to the selected function block and determining a probability score for each FB of the set of function blocks by a ML model; recommending the set of function blocks based on a priority of the probability score; and causing to display the recommended FB on an interface of the PLD (1000).

## Description

The present disclosure relates generally to functional block diagram programming of Programmable Logic Device (PLD), and more specifically to a method and system for optimizing functional block diagram programming for an automation environment using function block of distinct shape or distinct color.

Generally, Programmable Logic Devices (PLDs) are used in various control applications for example as controllers or drivers for industrial and automation applications. The control applications can be for example but not limited to operating electric motors, substation automation control, etc. In industrial automation environments, control systems are used to drive various operations along an industrial line. Control code is used by industrial drives or Programmable Logic Controllers to drive industrial assets, devices, and sensors in an industrial process. Control programs are typically developed by programmers prior to implementation. The PLDs are programed and configured in device-independent programming as per international standard IEC 61131-3 indicating compatible programming languages. The programming and configuration of the PLDs are implemented by engineering tools in the form of a sequence of individual program instructions, functionally associated program instructions in each case forming a function block. A PLC program associated with one automation process may include multiple such program modules.

One of the widely used PLC programming languages is the Function Block Diagram (FBD). The FBD is a graphical programming language that allows users to create function blocks and connect it together to form a control sequence. In FBD programming, each function block is represented by a graphical symbol, and the connections between them are represented by lines that carry the data and control signals. The inputs are passed into the function blocks, a logic corresponding to the function block is performed on the inputs, output variables are passed out of the block. However, in case of complex and larger programs like load shedding, overload management, etc., which need to be converted into the FBD there may be a problem of readability due to many blocks represented via interconnecting lines crisscrossing each other. Also, in case of the complex programs the function blocks may include larger sections of code requiring a domain expert having expertise of the domain and a developer to write the code. As a result, the process of coming up with the FBD requires two resources which downplays the very purpose of the FBD programming language which is easy to code, has low requirement of resources and low time consumption for design and programming.

In light of the above, there remains a need for FBDs of the programs that are complex and larger to be readable, understandable, and also easily modifiable. It is also required to make the FBD more intuitive and easier. At the same time doing away with the need for deep knowledge of programming which makes it easy for any person to implement the logic associated with the FBD.

The above-mentioned challenges are addressed by the proposed solution by using function blocks having shapes like wedges, semicircle etc., at sides (like floor puzzle games having different pieces which are connected to form a perfect shape) to differentiate properties of output and input pins. Further, the function blocks may include distinct colours e.g., Boolean blocks in blue colour, decision making blocks like If-else blocks in distinct colour than blue, etc. This helps the user to identify the program and debug easily. As a result, the proposed solution addresses both the problems of enhancing the readability of the FBD and enabling the domain expert to program with ease, without requiring an expertise in programming.

The proposed solution also includes a machine learning model to recommend next probable block(s) related to the already added blocks while constructing the FBD. As a result, the proposed solution further increases efficiency by reducing the possibility of the user choosing or using irrelevant blocks while generating the FBDs. This also reduces the time required for generating the FBDs are the recommendations for the next blocks are continuously provided until the final FBD is completed.

The object of the present disclosure is achieved by a computer-implemented method for optimizing functional block diagram programming for an automation environment. The method includes receiving a user input selecting a function block associated with the functional block diagram configured for implementation by a programmable logic device (PLD) to control an automated process in the automation environment. Each function block of the plurality of function blocks is characterized by at least one of a distinct shape and a distinct color differentiating a property associated with at least one input and at least one output of each function block. The method also includes determining a set of function blocks of the plurality of function blocks corresponding to the selected at least one function block and determining a probability score for each function block of the set of function blocks by a machine learning (ML) model. The probability score indicates a probability of occurrence of each of the function blocks as a next function block in the functional block diagram programming. Further, the method also includes recommending the set of function blocks based on a priority of the probability score and causing to display the recommended function blocks on an interface of the PLD.

In one or more embodiments, determining, by the processor, the probability score for each function block of the set of function blocks by the ML model includes receiving a plurality of programming logic codes for the automated process in the automation environment from a plurality of sources and historical functional block diagram data and encoding the plurality of programming logic codes. The method also includes converting the plurality of encoded programming logic codes into vectors in a numerical representation and determining temporal dependencies between the sequence of instructions based on the vectors. Each instruction in the sequence of instructions is dependent on a preceding instruction in the sequence of instructions. Then the method includes determining the probability score for each function block of the set of function blocks by the ML model based on the temporal dependencies between the sequence of instructions.

In one or more embodiments, the plurality of programming logic codes comprises sequence of instructions from a plurality of operations associated with the automated process and wherein each instruction is indicated using a function block in the function block diagram.

In one or more embodiments, the temporal dependencies between the sequence of instructions from the plurality of operations is determined using a long - short term memory (LSTM) model.

In one or more embodiments, the method further includes performing an attention mechanism to extract attention weights associated with each instruction in the sequence of instructions and determining a significance score of each instruction with respect to other instructions in the sequence of instructions and determining the probability score for each function block of the set of function blocks by the ML model based on the significance score.

In one or more embodiments, the method further includes receiving historical functional block diagrams and determining vectors for the historical functional block diagrams and training the ML model based on the vectors, continuously.

In one or more embodiments, the method further includes receiving a user selection of a recommended function block and generating the function block diagram for implementation by the PLD to control the automated process in the automation environment.

The object of the present disclosure is also achieved by a system for optimizing functional block diagram programming for an automation environment. The system includes an application interface for communicating with a PLD, a processor, and a memory coupled to the processor. The memory includes a library of logic instruction blocks and instructions which, when executed by the processor, configures the processor to receive a user input selecting a function block associated with the functional block diagram configured for implementation by the PLD to control an automated process in the automation environment. Each function block of the plurality of function blocks is characterized by at least one of a distinct shape and a distinct color differentiating a property associated with at least one input and at least one output of each function block. The processor is also configured to determine a set of function blocks of the plurality of function blocks corresponding to the selected at least one function block and determine a probability score for each function block of the set of function blocks by a machine learning (ML) model. The probability score indicates a probability of occurrence of each of the function blocks as a next function block in the functional block diagram programming. Furthermore, the processor is also configured to recommend the set of function blocks based on a priority of the probability score; and cause to display the recommended function blocks on an interface of the PLD.

The object of the present disclosure is further achieved by a computer program code which, when executed by a processor, causes the processor to carry out steps of the aforementioned method.

The object of the present disclosure is further achieved by a computer program product comprising computer program code which, when executed by a processor, causes the processor to carry out steps of the aforementioned method.

Still other aspects, features, and advantages of the disclosure are readily apparent from the following detailed description, simply by illustrating a number of particular embodiments and implementations, including the best mode contemplated for carrying out the disclosure. The disclosure is also capable of other and different embodiments, and its several details may be modified in various obvious respects, all without departing from the scope of the disclosure. Accordingly, the drawings and description are to be regarded as illustrative in nature, and not as restrictive.

A more complete appreciation of the present disclosure and many of the attendant aspects thereof will be readily obtained as the same becomes better understood by reference to the following description when considered in connection with the accompanying drawings:
- FIG 1: is a flowchart representation of a computer-implemented method for optimizing functional block diagram programming for an automation environment, in accordance with one or more embodiments of the present disclosure;
- FIG 2: is a block diagram representation of a system for optimizing functional block diagram programming for the automation environment, in accordance with one or more embodiments of the present disclosure;
- FIG 3A: is an exemplary representation of a functional block diagram for a timer operation, in accordance with a prior art;
- FIG 3B: is an exemplary representation of functional blocks for the timer operation, in accordance with one or more embodiments of the present disclosure;
- FIG 3C: is an exemplary representation of the functional block diagram for the timer operation, in accordance with one or more embodiments of the present disclosure;
- FIG 4A: is an exemplary representation of a functional block diagram for sequential algebraic operations, in accordance with a prior art;
- FIG 4B: is an exemplary representation of recommendation of functional blocks for the sequential algebraic operations, in accordance with one or more embodiments of the present disclosure;
- FIG 4C: is an exemplary representation of the functional block diagram for the sequential algebraic operations, in accordance with one or more embodiments of the present disclosure; and
- FIG 5: is a flowchart representation of a computer-implemented method for managing the PLD deployable in the automation environment, in accordance with one or more embodiments of the present disclosure.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for optimizing functional block diagram programming for an automation environment are disclosed herein. In the following description, for the purposes of explanation, numerous specific details are set forth in order to provide a thorough understanding of the embodiments of the disclosure. It is apparent, however, to one skilled in the art that the embodiments of the disclosure may be practiced without these specific details or with an equivalent arrangement. In other instances, well-known structures and devices are shown in block diagram form in order to avoid unnecessarily obscuring the embodiments of the disclosure.

Conventional methods include the FBDs comprising multiple blocks in complex programs. Each of these multiple blocks are connected to each other by lines which results in crisscrossing of the lines making modifications or corrections, if any a cumbersome process. Unlike to the conventional methods and systems, the proposed solution includes the blocks in the FBD having several types of shapes, especially at the ending sides rather than all being of rectangle shape.

The shape in the proposed solution enables the blocks to fit in like a puzzle thereby avoiding the lines for connecting the blocks.

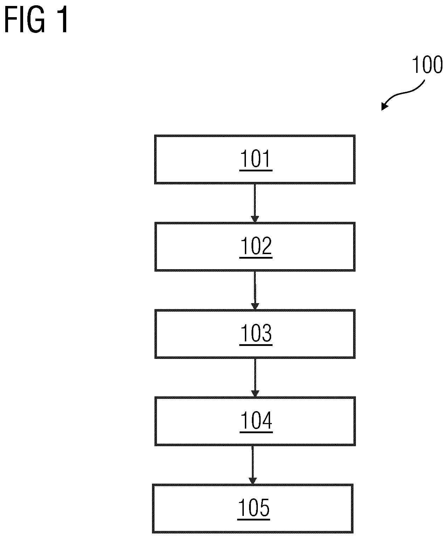

Referring now to FIG 1, illustrated is a flowchart of a method (as represented by reference numeral 100) for optimizing functional block diagram programming for an automation environment, in accordance with an embodiment of the present disclosure. As used herein, optimizing the functional block diagram programming refers to making the programming of FBD easier, modular, and intuitive to not just developers but also to anyone without deep knowledge about the programming languages, for example domain experts. This includes introduction of function blocks with distinct shape or distinct color which differentiates a property associated with input and output of each function block. However, complex FBDs with a large number of function blocks which are connected to each other with the conventional lines, impact readability of the FBD making any modifications or corrections to the FBD a cumbersome and time-consuming task.

This approach aims to enhance the efficiency of generating, reading and modification of complex FBDs, thereby also enhancing the ease of usage of the FBDs for any user. The proposed solution also adopts a machine learning model to recommend next probable blocks related to the already added blocks while constructing the FBD. As a result, the proposed solution further increases the efficiency by reducing the possibility of the user choosing or using irrelevant blocks while generating the FBDs. This also reduces the time required for generating the FBDs are the recommendations for the next blocks are continuously provided until the final FBD is completed.

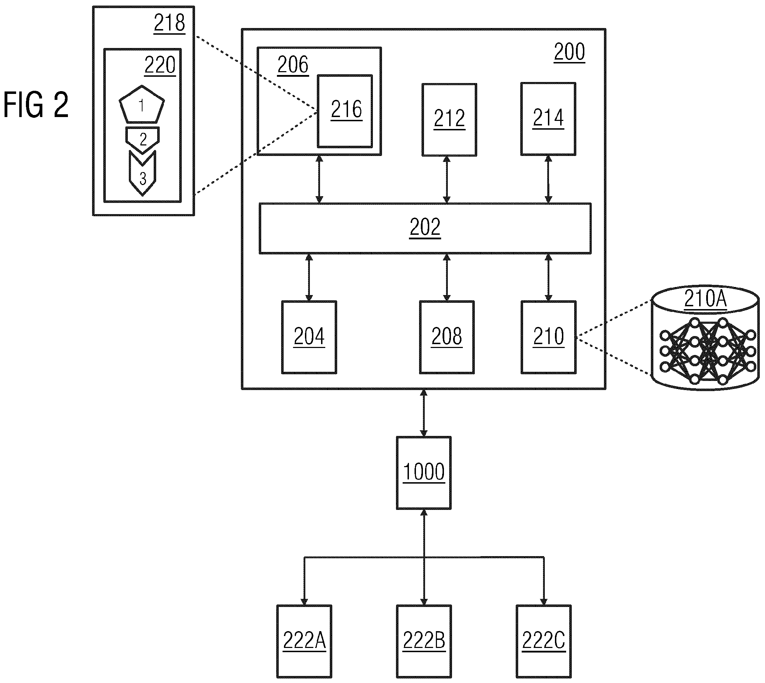

Referring to FIG 2, illustrated is a block diagram of a system 200 for optimizing functional block diagram programming for an automation environment, in accordance with one or more embodiments of the present disclosure. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product 200 programmed for performing the said purpose. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes a processor 204 and a memory 206. Herein, the memory 206 is communicatively coupled to the processor 204. In an example, the memory 206 may be embodied as a computer readable medium on which program code sections of a computer program are saved, the program code sections being loadable into and/or executable in a system to make the system 200 execute the steps for performing the said purpose.

Generally, as used herein, the term "processor" refers to a computational element that is operable to respond to and processes instructions that drive the system 200. Optionally, the processor includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processor" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory 206 may be volatile memory and/or non-volatile memory. The memory 206 may be coupled for communication with the processor 204. The processor 204 may execute instructions and/or code stored in the memory 206. A variety of computer-readable storage media may be stored in and accessed from the memory 206. The memory 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processor 204 has connectivity to the bus 202 to execute instructions and process information stored in the memory 206. The processor 204 may include one or more processing cores with each core configured to perform independently. A multi-core processor enables multiprocessing within a single physical package. Examples of a multi-core processor include two, four, eight, or greater numbers of processing cores. Alternatively, or in addition, the processor 204 may include one or more microprocessors configured in tandem via the bus 202 to enable independent execution of instructions, pipelining, and multithreading. The processor 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems, the PLD 1000 and the automation systems 222A-222C for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection. The communication interfaces may also include industrial ethernet, Institute of Electrical and Electronic Engineers (IEEE) 802.3 (ENET), IEEE 802.11 (WIFI), Bluetooth, Time Division Multiplex (TDM), Data Over Cable System Interface Specification (DOCSIS), Internet Protocol (IP), General Packet Radio Service Transfer Protocol (GTP), etc.

The system 200 also includes a machine learning (ML) model repository 210. As used herein, the ML model repository 210 is an organized collection of structured data, typically stored in a computer system and designed to be easily accessed, managed, and updated. The ML model repository 210 may be in form of a central repository of information that can be queried, analysed, and processed to support various applications and business processes. In the system 200, the ML model repository 210 provides mechanisms for storing, retrieving, updating, and deleting data, and typically includes features such as data validation, security, backup and recovery, and data modelling. The ML model repository 210 may be designed using relational or non-relational database management systems, depending on the specific requirements and preferences of the system 200. The ML model repository 210 hosts machine learning model 210A configured to optimize the functional block diagram programming for the automation environment (e.g., diagram 220). The ML model 210A is trained using input data generated from by the PLD 1000, automation systems 222A-222C and historical functional block diagrams associated with various automation processes in the automation environment.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display. It is to be understood that, when reference is made in the present disclosure to the term "display" this refers generically either to a display screen on its own or to a screen and an associated housing, drive circuitry and possibly a physical supporting structure, of which all, or part of is provided for displaying information.

In the present system 200, the processor 204 and accompanying components have connectivity to the memory 206 via the bus 202. The memory 206 includes both dynamic memory (e.g., RAM, magnetic disk, writable optical disk, etc.) and static memory (e.g., ROM, CD-ROM, etc.) for storing executable instructions that when executed perform the method steps described herein for route planning of the EVs. In particular, the memory 206 includes a module arrangement 216 to perform steps for managing the parking of the EVs in the depot. Also, in the system 200, the memory 206 may be configured to store the data associated with or generated by the execution of the inventive steps.

In the present system 200, the user interface 218 is the UI of an application to generate the functional block diagrams 220. The application can be for example a design application, a PLC programming application, etc. The UI 218 is a screen with which the user can interact and provide the inputs for generating the functional block diagram 220. The UI 218 includes a display, keyboard, touchscreen, tablet, and the like. The UI 218 displays a Guided User Interface (GUI) that allows a user to interact with the application(s) hosted by the system 200 to generate the functional block diagram 220. A user may interact with the GUI via the UI 218 to generate the functional block diagram 220. For example, a user may select, drag-and-drop, or perform some type of action via UI 218 and the GUI to construct the functional block diagram 220. The functional block diagram 220 comprises "Block 1", "Block 2", and "Block 3" that are connected in series. The system 200 may transfer the functional block diagram 220 to the PLD 1000 to control the operations of the automation systems 222A-222C. Typically, the blocks of the functional block diagram 220 comprise control code chunks that correspond to the automation systems 222A-222C.

The system 200 is connected to the PLD 1000. The PLD 1000 is used to control the automation processes in the automation environment. The PLD 1000 is programmed using PLD code languages such as function block diagrams (FBD) which may use predefined functions. The FBD is represented in the proposed solution by the function blocks with the distinct shapes or distinct colours which indicate the relationship between the input and the output pins. As a result, a user may be able to select and implement these predefined functions and the programming may be completed by the user providing needed parameters to complete the selected functions.

The PLD 1000 receives and implements the functional block diagram 220 from the system 200 to control the operation of the automation systems 22A-22C. The blocks that constitute functional block diagram 220 comprise control code that provide instructions for the PLD 1000 to control the operations of the automation systems 22A-22C in the automation environment. Here, the automation systems 222A-222C represent automated processes in the automation environment. For example, each of the automated systems 222A-222C may include a set of machines connected in series that are configured to carry out an industrial process. These automated systems 222A-222C may perform identical, substantially similar, or different automation process. Each of the automated systems 222A-222C may include any number of machines and there is no limitation on the same. The machines that comprise the automated systems 222A-222C include pumps, compressors, heat exchanges, centrifuges, mills, conveyers, filters, and the like. It should be appreciated that there is no limitation on the number of automation systems, in the scope of the proposed solution. The PLD 1000 transfer the executed instructions to the automated systems 222A-222C to implement their respective automation processes. The automated systems 222A-222C receive the executed instructions and responsively implement their automated processes.

Referring to FIGS 1 and 2 in combination, the various steps of the method 100 as described hereinafter may be executed in the system 200, or specifically in the processor 204 of the system 200, for - optimizing the functional block diagram programming for the automation environment. For purposes of the present disclosure, optimizing the functional block diagram programming for the automation environment in the present method 100 is embodied as an optimization algorithm for optimizing the functional block diagram programming for the automation environment, with the terms of functional block and blocks and functional block diagram being interchangeably used hereinafter. It may be appreciated that although the method 100 is illustrated and described as a sequence of steps, it may be contemplated that various embodiments of the method 100 may be performed in any order or a combination and need not include all of the illustrated steps.

In embodiments of the present disclosure, at step 101, the method 100 includes receiving a user input selection for a function block associated with a functional block diagram 220 which is configured to be implemented by the PLD 1000 to control the automated process in the automation environment. Here, in the proposed solution each function block is characterized by at least one of a distinct shape and a distinct colour differentiating a property associated with an input and an output of each function block. The conventional rectangular function blocks are replaced in the proposed solution with blocks having shapes like wedges, semicircle etc at the sides to differentiate the properties of the output and input pins. Like floor puzzles games different pieces which are connected to form the perfect shape. In another embodiment, distinct colour coding is used for the different blocks for example Boolean blocks are represented in blue colour, decision making blocks in red colour, algebraic operations in green colour, etc. The user can select the blocks required depending on the logic required for generating the function block diagram. The use of distinct shapes or distinct colours for the function blocks enables the user to not only easily generate complex function block diagrams but also to identify the program and debug easily in case of errors.

In embodiments of the present disclosure, at step 102, the method 100 includes determining a set of function blocks corresponding to the selected function block. Here, the ML model 210A determines the function blocks that are already selected and added to the UI 218 based on some logic by the user. For example, consider that the user is performing a multiplication of signals, and the user has already selected the functional blocks for the input signals and the multiplication block. Then, based on the already selected blocks the ML model 210A determines the possible blocks that might be required by the user next to complete the functional block diagram such as for example, the output block, another multiplication block to generate a percentage of the output, an addition block, etc. The possible blocks that might be required by the user next are required to be compatible with the already selected blocks. Further, in the proposed solution the compatibility can be gauged based on the fit of the block to the already existing last block. For example, if the last block added by the user has a triangle shape at the output end, then the possible next block needs to have a triangle shape at the input end. Therefore, the user can easily figure out the compatibility of the blocks visually. This drastically increases the efficiency of the FBD programming and reduces the time required for generating and debugging.

In embodiments of the present disclosure, at step 103, the method 100 includes determining a probability score for each function block of the set of function blocks by the ML model 210A. The probability score indicates a probability of occurrence of each of the function blocks as a next function block in the functional block diagram 220. Here, the ML model 210A after determining the possible next function blocks based on the already added function blocks, determines the probability score for each of these possible function blocks.

To determine the probability, score the ML model 210A receives multiple programming logic code for the automated process in the automation environment from multiple sources and historical functional block diagram data. The programming logic code includes sequence of instructions from multiple operations associated with the automated process. Each instruction is indicated using a function block in the function block diagram. For example, the programming logic code to control a motor may be written in different steps by different users. Some users may write a simple code comprising 10 lines whereas another user may write 15 lines of code for achieving the same result. In such as a scenario the successive function block may differ. Hence, the ML model 210A takes into consideration the programming logic code for a specific scenario from various sources. The ML model 210A also uses the historical functional block diagram data while determining the next possible function block. In another example, consider a scenario where a motor-stator needs to be operated. There are not many possible combinations of operations which are provided as input for the said scenario and specific set of logical operations are used. This information is captured by receiving the programming logic code. A lot of history data is required for this. Several people may have done this programming. The multiple ways in which it is done would be used as input for providing the recommendation. This is a continuous learning to make the ML model 210A perform and recommend better over a period of time.

Further, the ML model 210A encodes the programming logic code received from multiple sources and the historical functional block diagram data. The encoded programming logic code is then converted into vectors in a numerical representation. All PLC instructions are represented in a multi-dimensional space such as for example but not limited to a 3D space. Further, the ML model 210A determines temporal dependencies between the sequence of instructions based on the vectors. The temporal dependencies between the sequence of instructions from the plurality of operations is determined using a long - short term memory (LSTM) model. Each instruction in the sequence of instructions is dependent on a preceding instruction in the sequence of instructions. For example, a complete instruction to start a motor may include 4-5 different sequences of instructions from several different operations. Here each instruction is dependent on the preceding instruction. Similarly, the proposed solution considers the entire sequence of the instructions and hence the LSTM memory mechanism of deep learning, is used to capture this dependency.

Then the ML model 210A determines the probability score for each function block of the set of function blocks based on the temporal dependencies between the sequence of instructions. Here, the probability score can be for example, 0.9 for Block 1, 0.87 for Block 3, and 0.4 for Block 2. This indicates that the most compatible block is Block 1. However, the user is free to override the probability score and select Block 2 as the next block as the Block 3 is also compatible with the already added blocks.

The ML model 210A is trained continuously based on the historical functional block diagrams and the PLC programming code received from multiple sources. The vectors for the historical functional block diagrams and the PLC programming code are used for training the ML model 210A. The ML model 210A may utilize supervised learning methods, unsupervised learning methods, and/or reinforcement learning methods to train itself. The output of the ML model 210A is generally function block recommendation list with or without the probability score, and/or settings to integrate the function blocks into the functional block diagram 220.

In another embodiment, the probability score can be determined by performing an attention mechanism to extract attention weights associated with each instruction in the sequence of instructions by the ML model 210A. Then, the ML model 210A determines a significance score of each instruction with respect to other instructions in the sequence of instructions and determines the probability score for each function block based on the significance score.

In embodiments of the present disclosure, at step 104, the method includes recommending the set of function blocks based on a priority of the probability score. The system 200 then determines the priority of the function blocks which are most probable to be the next block in the FBD. The priority is determined based on the probability score. For example, if the probability scores are for example, 0.9 for Block 1, 0.87 for Block 3, 0.4 for Block 2, 0.6 for Block 4, etc then the order of priority is Block 1, Block 3, Block 4 and then Block 2. The proposed solution after determining the priority order generates a recommendation list which includes the most probable next blocks in the priority order. Therefore, the proposed solution enables the user to select the best possible next block from the multiple blocks which may be available in the programming language. As a result, the user need not go through the complete list of the function blocks to select the next block for the functional block diagram 220.

In embodiments of the present disclosure, at step 105, the method includes causing to display the recommended function blocks on the user interface 218 of the PLD 1000. The recommended list of function blocks is then displayed on the UI 218 for the user to select and add the next function block to complete the FBD 220. However, the user is free to override the recommendation and select any other function block. The system 200 then receives the user selection of the recommended function block and generates the final function block diagram 220 for implementation by the PLD 1000 to control the automated process in the automation environment. Further, the user is also allowed to define their own shapes or colours for specific function blocks. In such a scenario the system 200 automatically modifies the shapes of the possible corresponding function blocks to indicate the compatibility.

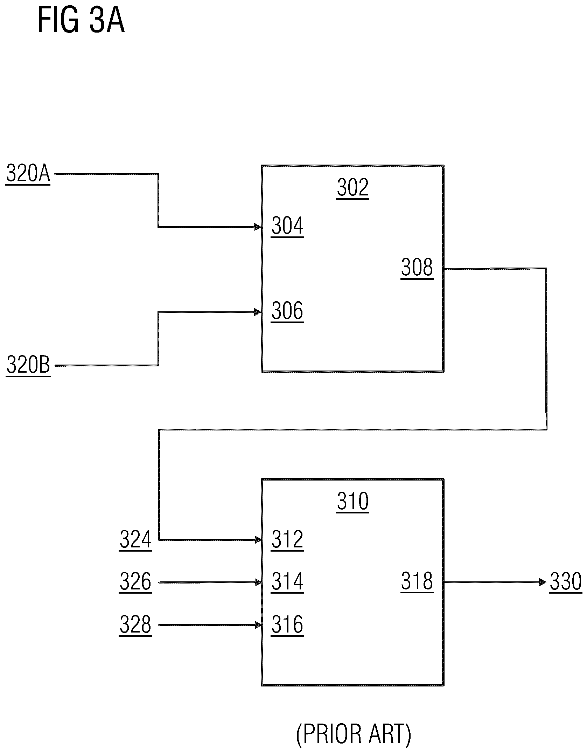

FIG 3A is an exemplary representation of a functional block diagram for a timer operation, in accordance with a prior art. In general, the PLD 1000 may be configured to operate or drive an electric motor as the PLDs 1000 are widely used in motion control, positioning control, and torque control. In one motor control example, the programming of the PLD 1000 may include timers that control various aspects of motor operation, including a drive signal pulse width, a drive signal duty cycle, and drive signal on and off times, among other things. Referring to the FIG. 3A, consider a portion of the function block diagram includes two major function blocks i.e., a FBD AND block 302 and a FBD timer 310.

The FBD AND block 302 includes two input pins 304 and 306 and one output pin 308. A first variable 320A is connected to input pin 304 and a second variable 320B is connected to input pin 306. The output of the FBD AND block 302 is a Boolean value which is available at the output pin 308. The FBD timer 310 includes three input pins 312, mode pin 314 and time pin 316, and output pin 318. The output 308 from the FBD AND block 302 is connected to the input pin 312, a delay signal is provided to the mode pin 314 and a 30 second time signal is connected to the time pin 316. The variable output 330 is available at the output pin 318.

Here, it may be noted that there is a line which connects the Boolean value available at the output pin 308 to the input pin 312. As mentioned earlier the FIG. 3A provides only a portion of the complete FBD and hence the complete FBD will include multiple lines crisscrossing throughout the FBD impacting the readability of the FBD. This will make the entire FBD look very clumsy and any modifications to the FBD will become a cumbersome process. Further, it may be noted that the person writing the FBD code will need to have knowledge about the compatibility of Boolean value and the connection to the apt input pins.

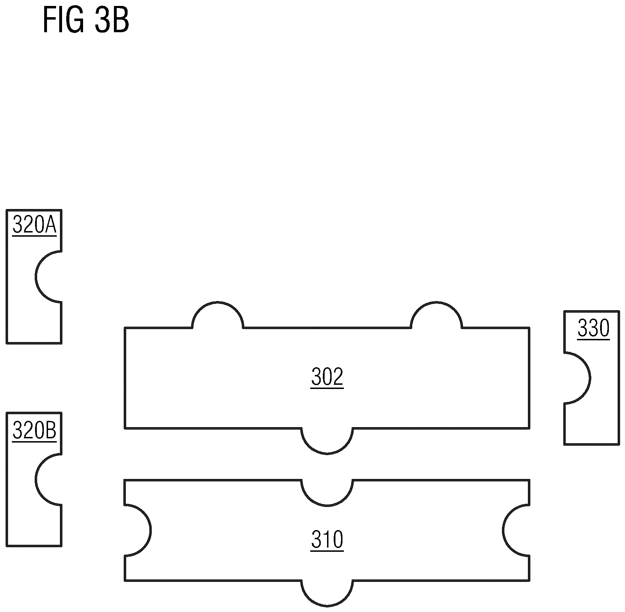

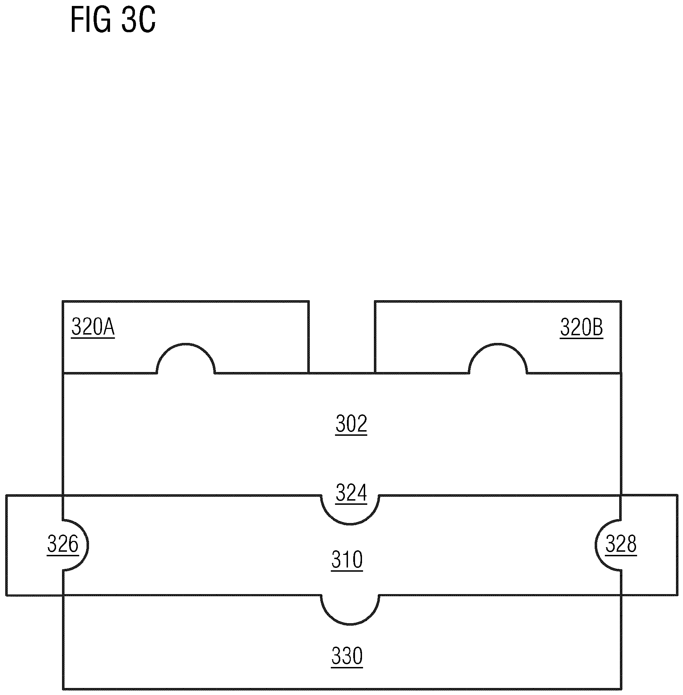

FIG 3B is an exemplary representation of functional blocks for the timer operation, in accordance with one or more embodiments of the present disclosure. FIG 3C is an exemplary representation of the functional block diagram for the timer operation, in accordance with one or more embodiments of the present disclosure.

Referring to the FIG. 3B in conjunction with the FIG. 3A, the proposed solution includes usage of function blocks with distinct shapes like wedges, semicircle etc., at the sides to differentiate the properties of the output and input pins. This replaces the conventional rectangular function blocks which needs to be connected with the lines from on output pin to the input pin of another function block.

It may be observed from the FIG. 3B, that the function blocks with distinct shapes resemble the pieces of the floor puzzle games (different pieces which can be connected to form the perfect shape). Here, the first variable 320A and the second variable 320B corresponding to the FIG. 3A are provided in the form of function block with unique arc at the point of connection to the timer FBD 310. The output 330 is again another unique block similar to the first variable 320A and the second variable 320B, but with the arc at an opposite side. The FIG. 3C indicates the final FBD using the proposed optimization technique, for the conventional FBD provided in the FIG. 3A. It may be observed that the compatibility between the various inputs and the output is clearly visualized in the final FBD.

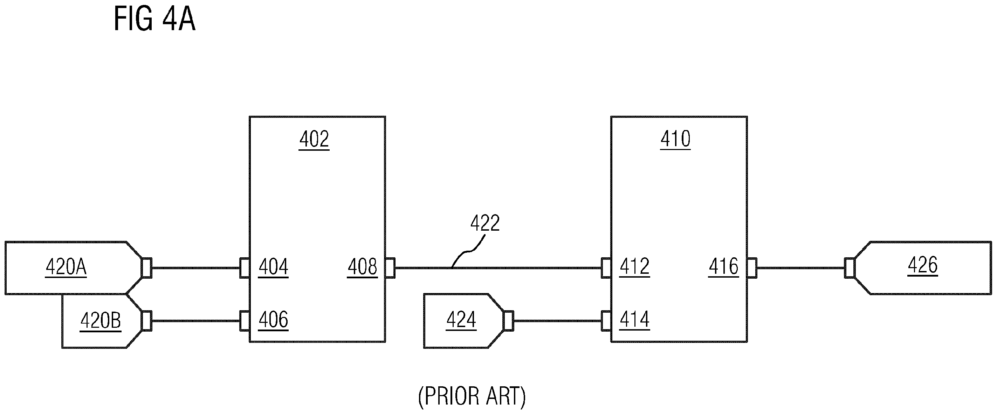

FIG 4A is an exemplary representation of a functional block diagram for sequential algebraic operations, in accordance with a prior art. Referring to the FIG. 4A, consider a use case where a level of a tank needs to be expressed in percentage. Therefore, a FBD division block 402 and a FBD multiplication block 410 are used. The FBD division block 402 includes two input pins 404 and 406 and an output pin 408. Consider the level of the tank 420A is 1000 and is provided to the input pin 404, and a base value of 10000 is provided to the input pin 406. The output of the FBD division block 402 is 0.1 which is available at the output pin 408.

Further, the FBD multiplication block 410 includes two input pins 412 and 414 and an output pin 416. The output of the FBD division block 0.1 is provided to the input pin 412 of the FBD multiplication block 410. Further, a value of 100 is provided as input to the input pin 414 to determine the percentage of the level of the tank. The output of the FBD multiplication block 410 is the percentage of the level of the tank. The percentage of the level of the tank is 10% (indicated as 426 in the FIG. 4A) which is available at the output pin 416. This again involves connecting the output of one block to the other using the lines and requires someone with deep programming knowledge to understand the compatibility of the various signals. It may be noted that there may be instances where several types of inputs and outputs may be used in the FBD such as for example but not limited to integers, Boolean values, decimals, words, etc. which may not be compatible with each other. The use of simple straight lines to connect the output of one FB to the other FB may lead to the user to disregard the compatibility mentioned above. As a result, the error would appear much later when the user has completed the entire FBD making it extremely difficult to figure out the exact cause and location of the error. Also, this would require an experienced FBD developer to rectify the FBD, thereby consuming human resource and time for the same. Currently there is no mechanism by which any user who is generating the FBD is able to visually figure out the compatibility of the FBs.

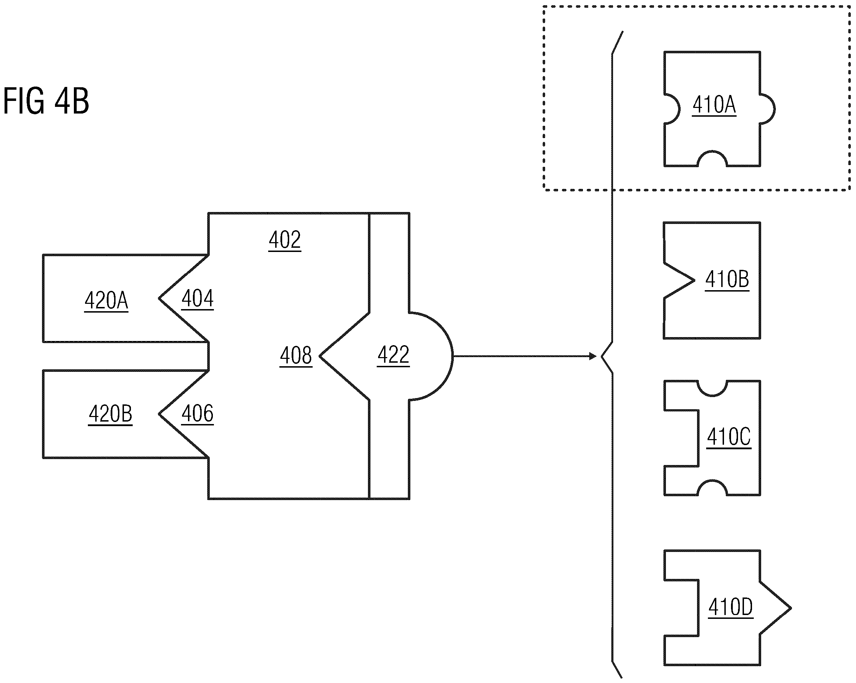

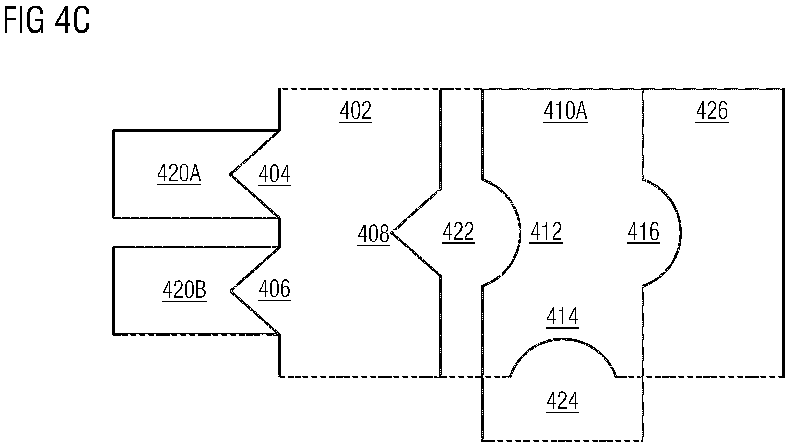

FIG 4B is an exemplary representation of recommendation of functional blocks for the sequential algebraic operations, in accordance with one or more embodiments of the present disclosure. FIG 4C is an exemplary representation of the functional block diagram for the sequential algebraic operations, in accordance with one or more embodiments of the present disclosure. Referring to the FIG. 4B in conjunction with the FIG. 4A, similar to the FIG. 3A-3C the FBDs with distinct shape are used to indicate each of the functions. However, once the output 422 is available, the user is required to add the next block to the FBD. Here, the FIG. 4B indicates the system 200 automatically recommending various possible blocks, each indicating distinct functions, to the user.

In the example, it may be noted that each of the recommended block has a different dimension indicating the input and the output pins of the block. From the FIG. 4A, the next block in the FBD is the multiplication block 410. The system 200 here is automatically recommending 410A-410D blocks. In one scenario, each of the 410A-410D blocks may be multiplication blocks. However, not all of the 410A-410D blocks may be compatible with the output 422, as say for example 410C receives only word inputs whereas 410A receives decimal inputs. Further, 410A can be made to visually indicate the compatibility with the inputs by varying the dimensions of the input pins (indicated by the semicircular shape in the FIG. 4B). Also, the compatibility of the current FB with the recommended FBs can be indicated by varying usage of colours during the recommendation such as if output 422 is displayed in red colour, then 410A may be displayed in red colour, 410B may be displayed in blue colour, 410C may be displayed in green colour, etc. Here, there is no limitation on the portion of the FB that may be displayed in the said colour. The colour may be provided to the input portion only or to the entire FB.

In one scenario, the 410A-410D blocks may be multiplication block, addition block, summation block, de-multiplication block, etc. The probability of each of these blocks being the suitable fit is determined by the probability score. The order in which the blocks are presented is based on the probability score associated with each of the possible function blocks. The function block appearing first in the list is the most probable function block. The user can choose any one of the function blocks from the recommendation list.

Referring to the FIG. 4C, the final FBD is provided which is like all pieces of the puzzle perfectly fitting with each other. Here, it may be noted that from the recommendation list the user select the option 410A and then also selects the other input and the output pins to generate the final FBD. The user is, however, free to override the recommendation list provided by the system 200 and choose a function block which is not provided in the recommendation list. Then, the new function block selected by the user will be used for training the ML Model 210A as one of the possible function blocks in the given scenario.

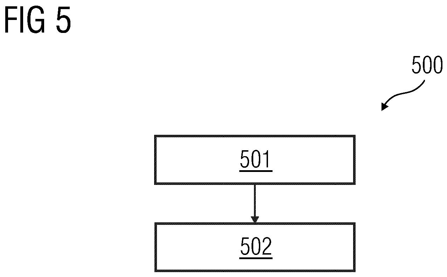

FIG 5 is a flowchart representation of a computer-implemented method 500 for managing the PLD deployable in the automation environment, in accordance with one or more embodiments of the present disclosure. Referring to the FIG. 5, in embodiments of the present disclosure, at step 501, the method 100 includes receiving the selection of one or more of the plurality of FBs from the user. Each FB of the plurality of FBs includes one or more physical properties that are distinct from the physical properties of one or more other FBs. For example, the input port of a FB may be a convex arc while the input port that of another FB can be a concave arc. The one or more physical properties are associated with the input and the output of the FB.

In embodiments of the present disclosure, at step 502, the method 100 includes generating the FBD based on the selection of the FBs. The FBD when implemented by the PLD (1000) controls the automated process associated with the PLD (1000). The FBD includes two or more of the FBs that are visibly linked based on their respective physical properties. Here, each FB corresponds to the instruction of the sequence of instructions and the sequence of instructions is associated with multiple operations corresponding to the automated process. For example, the instruction to start a motor can be written in multiple lines and each of the lines can be represented by the corresponding FB.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope.

**Reference Numerals**

| | |
|---|---|
| method | 100 |
| step | 101 |
| step | 102 |
| step | 103 |
| step | 104 |
| step | 105 |
| system | 200 |
| bus | 202 |
| processor | 204 |
| memory | 206 |
| interface | 208 |
| database | 210 |
| ML model | 210A |
| input device | 212 |
| output device | 214 |
| FBD management module arrangement | 216 |
| user interface | 218 |
| functional block diagrams | 220 |
| automation systems | 222A-222C |
| PLD | 1000 |
| FBD AND block | 302 |
| AND block pins | 304 - 308 |
| FBD timer | 310 |
| first variable | 320A |
| second variable | 320B |
| timer pins | 312-318 |
| values provided to the timer | 324-328 |
| variable output | 330 |
| FBD division block | 402 |
| Division block pins | 404-408 |
| FBD multiplication block | 410 |
| multiplication block pins | 412-416 |
| level of the tank | 420A |
| base value | 420B |
| value to determine percentage | 424 |
| final output | 426 |
| Recommended next FB | 410A-410D |
| method | 500 |
| step | 501 |
| step | 502 |

## Claims

1. A computer implemented method (100) for optimizing functional block diagram programming for an automation environment, the method (100) comprising:
receiving, by a processor (204), a user input selecting a function block (FB) associated with the functional block diagram configured for implementation by a programmable logic device (PLD) (1000) to control an automated process in the automation environment, wherein each function block of the plurality of function blocks is **characterized by** one or more physical properties that are distinct from the physical properties of one or more other FBs in the FBD, and wherein the physical properties are associated with an input and an output of the FB;
determining, by the processor (204), a set of function blocks of the plurality of function blocks corresponding to the selected at least one function block based on a probability of suitable fit, by a machine learning (ML) model;
determining, by the processor (204), a probability score for each function block of the set of function blocks by the ML model, wherein the probability score indicates the probability of suitable fit of each of the function blocks as a next function block in the functional block diagram programming;
recommending, by the processor (204), the set of function blocks based on a priority of the probability score; and
causing, by the processor (204), to display the recommended function blocks on an interface of the PLD (1000).

2. The method (100) according to claim 1, wherein determining, by the processor (204), the probability score for each function block of the set of function blocks by the ML model comprises:
receiving, by the processor (204), a plurality of programming logic codes for the automated process in the automation environment from a plurality of sources and historical functional block diagram data;
encoding, by the processor (204), the plurality of programming logic codes;
converting, by the processor (204), the plurality of encoded programming logic code into vectors in a numerical representation;
determining, by the processor (204), temporal dependencies between the sequence of instructions based on the vectors, wherein each instruction in the sequence of instructions is dependent on a preceding instruction in the sequence of instructions; and
determining, by the processor (204), the probability score for each function block of the set of function blocks by the ML model based on the temporal dependencies between the sequence of instructions.

3. The method (100) according to claim 2, wherein the plurality of programming logic codes comprises sequence of instructions from a plurality of operations associated with the automated process and wherein each instruction is indicated using a function block in the function block diagram.

4. The method (100) according to claim 2, wherein the temporal dependencies between the sequence of instructions from the plurality of operations is determined using a long - short term memory (LSTM) model.

5. The method (100) according to claim 1, further comprising:
performing, by the processor (204), an attention mechanism to extract attention weights associated with each instruction in the sequence of instructions;
determining, by the processor (204), a significance score of each instruction with respect to other instructions in the sequence of instructions; and
determining, by the processor (204), the probability score for each function block of the set of function blocks by the ML model based on the significance score.

6. The method (100) according to claim 1, further comprising:
receiving, by the processor (204), historical functional block diagrams;
determining, by the processor (204), vectors for the historical functional block diagrams; and
training, by the processor (204), the ML model based on the vectors, continuously.

7. The method (100) according to claim 1, further comprising:
receiving, by the processor (204), a user selection of a recommended function block; and
generating, by the processor (204), the function block diagram (220) for implementation by the PLD (1000) to control the automated process in the automation environment.

8. The method (100) according to claim 1, wherein the probability of suitable fit is associated with the physical property of the selected at least one function block.

9. A system (200) for optimizing functional block diagram programming for an automation environment, the system (200) comprising:
an application interface (218) for communicating with the system (200);
a processor (204); and
a memory (206) coupled to the processor (204), wherein the memory (206) comprises a library of logic instruction blocks and instructions which, when executed by the processor (204), configures the processor (204) to:
receive a user input selecting a function block associated with the functional block diagram configured for implementation by a Programmable Logic Device (PLD) (1000) to control an automated process in the automation environment, wherein each function block of the plurality of function blocks is **characterized by** one or more physical properties that are distinct from the physical properties of one or more other FBs in the FBD, and wherein the properties are associated with an input and an output of the FB;
determine a set of function blocks of the plurality of function blocks corresponding to the selected at least one function block based on a probability of suitable fit, by a machine learning (ML) model;
determine a probability score for each function block of the set of function blocks by the ML model, wherein the probability score indicates a probability of suitable fit of each of the function blocks as a next function block in the functional block diagram programming;
recommend the set of function blocks based on a priority of the probability score; and
cause to display the recommended function blocks on an interface of the PLD (1000).

10. A computer program product, comprising computer program code which, when executed by a processor (204), cause the processor (204) to carry out the method (100) of one of the claims 1 to 8.

11. A computer-readable medium comprising a computer program product comprising computer program code which, when executed by a processor (204), cause the processor (204) to carry out the method (100) of one of the claims 1 to 8.

12. A computer-implemented method (500) for managing a programmable logic device (PLD) (1000) deployable in an automation environment, the method (500) comprising:
receiving a selection of one or more of a plurality of function blocks (FBs) wherein each FB of the plurality of FBs is **characterized by** one or more physical properties that are distinct from the physical properties of one or more other FBs, and wherein the one or more physical properties are associated with an input and an output of the FB; and
generating a functional block diagram (FBD) based on the selection of the FBs, wherein the FBD when implemented by the PLD (1000) controls an automated process associated with the PLD (1000).

13. The method (500) according to claim 12, wherein the FBD comprises two or more of the FBs that are visibly linked based on their respective physical properties.

14. The method (500) according to any one of claim 12 and 13, wherein each FB corresponds to at least one instruction of a sequence of instructions and wherein the sequence of instructions is associated with a plurality of operations corresponding to the automated process.

15. A computer program product, comprising function block diagram programming code which, when executed by a processor (204), causes the processor (204) to carry out the method (500) of claims 12 to 14.
